# EUROPÄISCHE PATENTANMELDUNG

(11) **EP 4 513 055 A1**
(43) Veröffentlichungstag der Anmeldung: **26.02.2025**
(21) Anmeldenummer: 24190206.3
(22) Anmeldetag: 23.07.2024
(51) Int. Cl.: F16F 13/14, F16F 13/16

(54) **MEHRDIREKTIONAL DÄMPFENDES HYDROLAGER**

(30) Priorität: 21.08.2023 DE 102023122308
(71) Anmelder: VORWERK AUTOTEC GmbH & Co. KG, 42287 Wuppertal (DE)
(72) Erfinder: Bosbach, Kevin, 58566 Kierspe (DE); Krajewski, Andreas, 58332 Schwelm (DE)
(74) Vertreter: Lippert Stachow Patentanwälte Rechtsanwälte

(57) **Zusammenfassung**

Die Erfindung betrifft ein hydraulisch dämpfendes Lager 1, umfassend ein sich axial erstreckendes Innenelement, einen Elastomerkörper 3, ein Käfigelement, das zumindest abschnittsweise im Elastomerkörper 3 eingebettet ist, wobei der Elastomerkörper 3 das Käfigelement und das Innenelement elastisch miteinander verbindet; eine das Innenelement, das Käfigelement und den Elastomerkörper 3 umgreifende Außenhülse 5 zumindest eine erste, eine zweite, eine dritte und eine vierte, jeweils zwischen Außenhülse und Innenelement angeordnete Fluidkammer (6a, 6b, 7a, 7b), die über Fluidkanäle verbunden sind. Jede der zumindest vier Fluidkammern (6a, 6b, 7a, 7b) ist so ausgebildet und eingerichtet, dass bei einer relativen Verlagerung von Innenelement und Käfigelement in einer ersten Richtung und bei einer relativen Verlagerung von Innenelement und Käfigelement in einer zweiten Richtung an der Verrichtung von Dämpfungsarbeit beteiligt ist.

## Beschreibung

Die Erfindung betrifft ein hydraulisch dämpfendes Lager umfassend ein sich axial erstreckendes Innenelement, einen Elastomerkörper sowie ein Käfigelement, das zumindest abschnittsweise im Elastomerkörper eingebettet ist, wobei der Elastomerkörper das Käfigelement und das Innenelement elastisch miteinander verbindet sowie eine das Innenelement, das Käfigelement und den Elastomerkörper umgreifende Außenhülse, wobei zumindest eine erste und eine zweite, jeweils zwischen Außenhülse und Innenelement angeordnete Fluidkammern vorgesehen sind, die über einen Fluidkanal verbunden sind.

Solche Lager werden beispielsweise als Buchsenlager zur Lagerung von Lenkern einer Fahrwerksaufhängung oder zur Aggregatlagerung, insbesondere zur Motorlagerung bei Kraftfahrzeugen verwendet. Um insbesondere beim Betrieb solcher Kraftfahrzeuge in vorgegebenen Anregungsfrequenz- bzw. Amplitudenbereichen eine verbesserte Dämpfung bereitzustellen, als sie mit einer reinen Elastomerdämpfung zu erreichen ist, ist ein solches gattungsbildendes Lager zur Verrichtung von hydraulischer Dämpfungsarbeit im Ansprechen auf entsprechende mechanische Anregungen ausgebildet. Hierzu sind die zumindest zwei, mittels eines Fluidkanals fluidverbundenen Fluidkammern so gestaltet, dass bei einer mechanischen Auslenkung des Käfigelements gegenüber dem Innenelement das Volumen einer Fluidkammer verringert werden kann, während das Volumen einer anderen, der erstgenannten zugeordneten Fluidkammer zunehmen kann, sodass ein Fluidaustauch zwischen den Kammern stattfinden kann. Vorzugsweise kann das Fluid als Dämpfungsflüssigkeit ausgebildet sein. Das Fluid strömt über den zumindest einen Fluidkanal zwischen den miteinander verbundenen Fluidkammern, wodurch hydraulische Dämpfungsarbeit verrichtet wird. Dabei können die zumindest beiden durch einen Dämpfungskanal verbundenen Fluidkammern abschnittsweise durch zumindest einen Blähfederabschnitt und/oder zumindest einen Tragfederabschnitt begrenzt sein. Eine mechanische Beanspruchung des auch als Hydrolager bezeichneten Lagers führt dazu, dass Dämpfungsfluid über den zumindest einen Dämpfungskanal von einer Kammer in die andere Kammer ausweicht und/oder ein zugeordneter Blähfederabschnitt aufgeweitet wird. Ein solches gattungsbildendes Hydrolager ist beispielsweise in der deutschen Patentanmeldung DE 10 2019 007 526 A1 offenbart.

Je nach Anwendung kann es zweckmäßig sein, ein Hydrolager nicht nur in Bezug auf eine einzelne Arbeits- bzw. Hauptdämpfungsrichtung auszubilden, in welcher im Ansprechen auf mechanische Anregungen vorgegebener Anregungsfrequenzen bzw. Amplitudenbereichen eine hydraulische Dämpfung bereitgestellt wird, sondern in mehrere, beispielsweise zwei Anregungsrichtungen die insbesondere senkrecht zueinander angeordnet sein können. Hierzu beschreibt die DE 10 2007 016 399 A1 ein mehrdirektional dämpfendes Hydrolager, das eingerichtet und ausgebildet ist, Dämpfungsarbeit sowohl in einer axialen Richtung des Lagers als auch in einer radialen Richtung des Lagers zu verrichten. Hierzu weist das bekannte Hydrolager ein Gehäuse mit einem Gehäuseoberteil und ein mit dem Gehäuseoberteil verbundenes Gehäuseunterteil sowie eine von dem Gehäuse aufgenommene, axial sowie radial wirkende elastomere Dämpfungsanordnung auf. Diese Dämpfungsanordnung weist mindestens ein Paar in axialer Richtung zueinander angeordnete, durch mindestens einen Kanal miteinander verbundene, sich vollumfänglich erstreckende Kammern sowie mindestens ein Paar in radialer Richtung zueinander und in der Umfangsrichtung des Hydrolagers verteilt angeordnete, durch mindestens einen Kanal verbundene Kammern für ein hydraulisches Dämpfungsmittel auf. Dabei bildet das Gehäuseoberteil einen Tragkörper aus, welcher einen Innenkern, eine radial zum Innenkern beabstandete Außenwand des Gehäuseoberteils und eine mit dem Innenkern und der Außenwand durch Vulkanisation verbundene, dem Innenkern in der axialen Richtung gegen die Außenwand abstützende elastomere Feder aufweist. Der Aufbau dieses mehrdirektional dämpfenden Hydrolagers ist jedoch sehr komplex und bedarf einer Vielzahl von Bauteilen, so dass der Bedarf besteht, ein Hydrolager bereitzustellen, das in der Lage ist in mehrere Arbeitsrichtungen, die insbesondere senkrecht zueinander orientiert sein können, hydraulische Dämpfungsarbeit zu verrichten und gleichzeitig einen einfachen Aufbau aufweist und damit kostengünstig herstellbar ist.

Diese Aufgabe löst die vorliegende Erfindung schon mit einem hydraulisch dämpfenden Lager mit den Merkmalen von Anspruch 1. Das erfindungsgemäße Lager weist ein sich axial erstreckendes Innenelement auf, einen Elastomerkörper, ein Käfigelement, das zumindest abschnittsweise im Elastomerkörper eingebettet ist, wobei der Elastomerkörper das Käfigelement und das Innenelement elastisch miteinander verbindet, eine das Innenelement, das Käfigelement und den Elastomerkörper umgreifende bzw. radial umgebende Außenhülse sowie zumindest eine erste und eine zweite, jeweils zwischen Außenhülse und Innenelement angeordnete und über einen Fluidkanal verbundene Fluidkammern auf. Das erfindungsgemäße Lager zeichnet sich dadurch aus, dass neben der ersten und zweiten Fluidkammer zumindest eine dritte und eine vierte Fluidkammer umfasst sind, die jeweils zwischen Außenhülse und Innenelement angeordnet sind, wobei die zumindest vier Fluidkammern über zumindest einen weiteren Fluidkanal fluidverbunden sind und wobei jede der zumindest vier Fluidkammern bei einer relativen Verlagerung von Innenelement und Käfigelement in einer ersten Hauptrichtung und bei einer relativen Verlagerung von Innenelement und Käfigelement in einer zweiten Hauptrichtung an der Verrichtung von Dämpfungsarbeit beteiligt ist, d.h. jede der zumindest vier Fluidkammern Teil eines hydraulischen Systems ist, in welchem sowohl bei einer relativen Verlagerung von Innenelement und Käfigelement in einer ersten Hauptrichtung als auch bei einer relativen Verlagerung von Innenelement und Käfigelement in einer zweiten Hauptrichtung hydraulische Dämpfungsarbeit verrichtbar ist. Vorzugsweise können die beiden Hauptrichtung senkrecht zueinander orientiert sein, insbesondere eine Axialrichtung und eine Radialrichtung sein.

Die Erfindung basiert auf der grundsätzlichen Idee, ein mehrdirektional dämpfendes Hydrolager auszubilden auf der Grundlage eines an sich bekannten einachsig dämpfenden Hydrolagers umfassend ein in dem Elastomerkörper eingebettetes Käfigelement, wobei erfindungsgemäß zumindest vier Fluidkammern vorgesehen sind, die über Fluidkanäle verbunden sind und die zumindest vier Fluidkammern jeweils unabhängig davon, ob das Hydrolager in einer ersten oder zweiten Richtung bzw. Hauptrichtung belastet wird, an der Verrichtung von hydraulischer Dämpfungsarbeit beteiligt sind. Dabei kann eine solche Beteiligung an der Verrichtung von Dämpfungsarbeit insbesondere darin bestehen, dass Dämpfungsfluid, insbesondere eine Dämpfungsflüssigkeit aus einer Fluidkammer herausströmt oder hineinströmt über einen zugeordneten Fluidkanal, wobei hydraulische Dämpfungsarbeit im Wesentlichen im Fluidkanal verrichtbar ist, welcher eine Fluid abgebende Fluidkammer und eine Fluid aufnehmende Fluidkammer verbindet.

Das erfindungsgemäße hydraulisch dämpfende Lager zeichnet sich mit dem beschriebenen Aufbau dadurch aus, dass ein mehrdirektional dämpfendes Lager bereitgestellt ist, das vergleichsweise wenig Bauteile umfasst, eine kompakte Bauweise ermöglicht und darüber hinaus eine Einrichtung unterschiedlicher Dämpfungseigenschaften des Lagers in zwei Hauptbelastungsrichtungen ermöglicht. Erfindungsgemäß sind die zumindest vier Fluidkammern zusammen mit den Fluidkanälen jeweils zur Bereitstellung eines in der ersten Richtung wirkenden und Dämpfungsarbeit verrichtenden hydraulischen Systems und eines in der zweiten Richtung wirkenden und Dämpfungsarbeit verrichtenden hydraulischen Systems eingerichtet. Vorzugsweise können dabei die beiden Hauptrichtungen senkrecht zueinander liegen, insbesondere kann die erste Hauptrichtung eine Axialrichtung des Lagers und die zweite Hauptrichtung eine radiale Richtung des Lagers darstellen. Bei dieser Ausführungsform können die zumindest vier Fluidkammern jeweils so ausgebildet und eingerichtet sein, dass sie sowohl bei einer Lagerbelastung in radialer Richtung als auch bei einer Lagerbelastung in axialer Richtung als Fluidkammer eines Dämpfungssystems wirken, die mit einer zugeordneten der anderen Fluidkammern und einem die beiden zugeordneten Fluidkammern fluidverbindenden Fluidkanal zur Verrichtung von Dämpfungsarbeit zusammenwirken.

Weitere erfindungsgemäße Merkmale und Weiterbildungen der Erfindung sind in der nachfolgenden allgemeinen Beschreibung, den Figuren, der Figurenbeschreibung sowie den Unteransprüchen angegeben.

Zur Bereitstellung eines in zwei Richtungen, insbesondere Hauptrichtungen arbeitendes Hydrolager kann vorgesehen sein, dass das erfindungsgemäße Lager zumindest zwei Paare von axial übereinander angeordnete und in Umfangsrichtung des Lagers zumindest überlappend angeordnete Fluidkammern aufweist, wobei die zumindest zwei Paare umfänglich zueinander beabstandet sind. Vorzugsweise kann die umfängliche Beabstandung der beiden Paare von axial übereinander angeordneten Fluidkammern zwischen 90° und 180° liegen, wobei insbesondere auch die beiden Grenzwerte der umfänglichen Beabstandung, d. h. 90° oder 180° möglich sind. Besonders zweckmäßig kann vorgesehen sein, dass die beiden Paare von axial übereinander angeordneten Fluidkammern radial gegenüberliegend, d.h. diametral zueinander angeordnet sind, entsprechend einer umfänglichen Beabstandung von etwa 180°.

Je nach Ausführungsform können die beiden Paare von axial übereinander angeordneten Fluidkammern auf unterschiedlicher axialer Höhe innerhalb des Lagers angeordnet sein. Besonders zweckmäßig kann vorgesehen sein, dass sich die beiden Paare von axial übereinander angeordneten Fluidkammern auf der gleichen axialen Höhe befinden. Letzteres kann zur Folge haben, dass ein Radialabschnitt, insbesondere ein radialer Wandabschnitt des Lagers, welcher ein Paar von axial übereinander angeordneten Fluidkammern separiert oder trennt, auf gleicher Höhe mit einem Radialabschnitt des Lagers liegt, der das andere der beiden Paare von axial übereinander angeordneten Fluidkammern trennt oder separiert.

Das erfindungsgemäße, mehrdirektional hydraulisch dämpfende Lager kann insbesondere als Buchsenlager ausgebildet sein zur Anordnung in einem zugeordneten Lagerauge eines ersten Bauteils, beispielsweise eines Kraftfahrzeug-Bauteils, wobei die Außenmantelfläche der Außenhülse des Lagers zur Anlage an eine das Lagerauge festlegende und an die Mantelfläche der Außenhülse angepasste Begrenzungsfläche des ersten Bauteils ausgebildet ist und das Innenelement ausgebildet ist zur Befestigung an einem zweiten Bauteil, insbesondere einem zweiten Bauteil des Kraftfahrzeuges. Dabei kann vorgesehen sein, dass das Innenelement des erfindungsgemäßen Lagers eine sich in Achsenrichtung erstreckende Durchführung aufweist zur Aufnahme eines Befestigungsbolzens zur Befestigung des erfindungsgemäßen Lagers an das benannte zweite Bauteil des Kraftfahrzeuges.

Zur Bereitstellung eines symmetrischen Ansprechverhaltens des erfindungsgemäßen mehrdirektional dämpfenden Hydrolagers kann zweckmäßigerweise vorgesehen sein, dass die beiden Fluidkammern eines jeweiligen Paares von axial übereinander angeordneten Fluidkammern sich im Wesentlichen über den gleichen Umfangsabschnitt erstecken.

Vorzugsweise kann vorgesehen sein, dass die zumindest vier Fluidkammern im Wesentlichen eine gleiche Erstreckung, d.h. ein identisches Erstreckungsmaß in Umfangsrichtung des Lagers aufweisen. Insbesondere kann vorgesehen sein, dass jeweils zwei Fluidkammern auf gleichem Umfangsabschnitt und axial versetzt angeordnet sind und ein erstes und zweites Paar von Fluidkammern bilden, wobei die beiden Paare der jeweils zwei Fluidkammern umfänglich um ca. 180° versetzt angeordnet sind.

Zur Minimierung des Gestaltungsaufwandes kann vorgesehen sein, dass jede der zumindest vier Fluidkammern mit einer einzelnen der anderen drei Fluidkammern über einen Fluidkanal fluidverbunden ist, wobei die miteinander verbundenen Fluidkammern radial gegenüberliegend und axial aufeinanderfolgend, d.h. übereinander angeordnet sind. Bei dieser Ausführungsform kann eine jeweilige Fluidkammer eine einzige zugeordnete Fluidkammer zum Austausch von Dämpfungsfluid und damit einen einzigen Dämpfungskanal zwischen zugeordneten Fluidkammern aufweisen, so dass die Dämpfung z.B. sowohl bei einer radialen als auch bei einer axialen Belastung mit einem im Wesentlichen gleichen hydraulischen Dämpfungssystem eingestellt ist, da der jeweilige Dämpfungskanal bzw. Fluidkanal für beide Hauptbelastungsrichtungen identisch ist.

Vorzugsweise kann vorgesehen sein, dass jeder Fluidkanal genau zwei der vom erfindungsgemäßen Lager umfassten Fluidkammern miteinander fluidverbindet.

Zur getrennten Einstellung der hydraulischen Dämpfung des erfindungsgemäßen Lagers in unterschiedliche Richtungen kann zweckmäßigerweise vorgesehen sein, dass zwischen den zumindest vier Fluidkammern jeweils vier Fluidkanäle angeordnet sind. Dabei kann vorgesehen sein, dass jeweils zwei Fluidkanäle zur Bereitstellung von Dämpfungsarbeit in einer ersten Hauptrichtung, beispielsweise in axialer Richtung und zwei Fluidkanäle zur Bereitstellung von Dämpfungsarbeit in einer zweiten Hauptrichtung, beispielsweise in radialer Richtung zwischen den zumindest vier Fluidkammern angeordnet sind.

Vorzugsweise können die Fluidkanäle zur Bereitstellung einer Dämpfung in die erste Hauptrichtung (z.B. in radialer Richtung) und Fluidkanäle zur Bereitstellung einer Dämpfung in die zweite Hauptrichtung (z.B.in axialer Richtung) zur Festlegung der jeweiligen Dämpfung geometrisch unterschiedlich gestaltet sein, insbesondere in Bezug auf Durchmesser, Länge und/oder Krümmung des jeweiligen Fluidkanals. Insofern kann die Gestaltung des erfindungsgemäßen Hydrolagers so ausgebildet sein, dass beim Auftreten einer Belastung auf das Lager in einer der Hauptrichtungen immer zwei hydraulische Systeme, umfassend jeweils zugeordnete Fluidkammern, die über einen zugeordneten Fluidkanal verbunden sind, wirken, d. h. Dämpfungsarbeit verrichten.

Es kann vorgesehen sein, dass jede der zumindest vier Fluidkammern mit einer zugeordneten axial beabstandeten ersten Fluidkammer mittels eines Fluidkanals fluidverbunden und gleichzeitig die erstgenannte Fluidkammer über einen anderen Fluidkanal mit einer umfänglich beabstandeten, zweiten Fluidkammer verbunden ist. Damit kann vorteilhafterweise das erfindungsgemäße Hydrolager bei einer beliebigen mechanischen Belastung, die zu einer relativen Verlagerung von Innenelement und Käfigelement des Lagers führt, zwei hydraulische Systeme zum gleichzeitigen Verrichten von Dämpfungsarbeit bereitstellen. Diese beiden hydraulischen Systeme können bereitgestellt werden unabhängig davon, ob die mechanische Belastung des Hydrolagers in eine einzelne der beiden Hauptrichtungen, die senkrecht zueinander verlaufen und z.B. eine Axialrichtung und Radialrichtung sein können oder sowohl eine Belastungskomponente des Lagers in die erste Hauptrichtung als auch eine Belastungskomponente des Lagers in die zweite Hauptrichtung verursacht, wobei die beiden Dämpfungssysteme zur Verrichtung von Dämpfungsarbeit unter Beteiligung aller vier Fluidkammern und unter Beteiligung der diese verbindenden Fluidkanäle eingerichtet sind.

Zur Separierung zweier im Bereich des gleichen Umfangsabschnittes angeordneten und axial beabstandeten bzw. aufeinanderfolgenden und obenstehend als Paar bezeichneten Fluidkammern kann zweckmäßigerweise vorgesehen sein, dass das Käfigelement im Längsschnitt des Lagers einen ersten Quersteg, der auch als Radialsteg bezeichnet werden kann, aufweist, der sich radial in Richtung zum Innenelement erstreckt, wobei dieser Quersteg zur Bereitstellung einer jeweiligen axialen Pumpfläche für die beiden, über einen vorgegebenen Umfangsabschnitt angeordneten und axial aufeinanderfolgenden Fluidkammern ausgebildet sein kann. Vorzugsweise kann dieser erste Radial- oder Quersteg an radial bzw. diametral gegenüberliegenden Längsstegen des Käfigelements angreifen bzw. von diesen ausgehen. Es sei bemerkt, dass ein solcher Quer- oder Radialsteg von Elastomermaterial belegt sein kann zur Festlegung einer jeweiligen Grenzfläche der beiden axial benachbarten bzw. aufeinanderfolgenden Fluidkammern, die ein Paar von axial benachbarten Fluidkammern bilden können.

Zur Bereitstellung eines weiteren Paares von axial aufeinanderfolgenden bzw. benachbarten Fluidkammern kann zweckmäßigerweise vorgesehen sein, dass zum besagten ersten Quersteg bzw. Radialsteg, vorzugsweise radial gegenüberliegend ein zweiter Quersteg bzw. Radialsteg des Käfigelements im Längsschnitt des Lagers vorgesehen ist, der sich wie der erste Quersteg radial in Richtung zum Innenelement erstreckt, wiederum auch zur Bereitstellung einer jeweiligen axialen Pumpfläche der beiden anderen, über einen vorgegebenen Umfangsabschnitt angeordneten und axial aufeinanderfolgenden Fluidkammern, d. h. einem zweiten Paar von axial aufeinanderfolgenden Fluidkammern. Vorzugsweise kann vorgesehen sein, dass die beiden Querstege bzw. Radialstege etwa auf gleicher axialer Höhe des Lagers angeordnet sind. Ferner kann vorgesehen sein, dass auch der zweite Quersteg bzw. Radialsteg sich zu den diametral gegenüberliegenden Längsstegen des Käfigelements erstreckt, an welchen auch der zweite Quersteg bzw. Radialsteg am Käfigelement befestigt ist.

Zweckmäßigerweise kann vorgesehen sein, dass einer der beiden Querstege, insbesondere beide Querstege, im Bereich seines Übergangs in einen jeweiligen Längssteg des Käfigelements eine gabelartige Aufspaltung aufweist, mit zwei axial zueinander beabstandeten und axial gegenläufigen Ausläufern, die in den zugeordneten Längssteg des Käfigelements übergehen bzw. mit diesem integral hergestellt sein können. Zur Gestaltung einer geringen Radialsteifigkeit des erfindungsgemäßen Hydrolagers in einem vorgegebenen Umfangsbereich kann zweckmäßigerweise vorgesehen sein, dass der jeweilige Quersteg bzw. Radialsteg axial zwischen den Ausläufern bzw. Befestigungen an den Längsstegen des Käfigelements beabstandet zum Innenelement verlaufen. Dabei kann vorgesehen sein, dass sich anhaftend an den, dem Innenelement zugewandten radialen Endabschnitt des jeweiligen Querstegs zwei gegenläufig und abgewinkelte innere elastomere Kammerwandabschnitte zum Innenelement anhaftend erstrecken zur axialen Abgrenzung der beiden axial aufeinanderfolgenden Fluidkammern. Vorzugsweise kann dabei vorgesehen sein, dass die beiden elastomeren Kammerwandabschnitte axial zueinander beabstandet sind, wobei zur Festlegung einer besonders geringen Radialsteifigkeit des Lagers ein zwischen den beiden Kammerwandabschnitten und dem Innenelement gebildeter Hohlraum mit einem Gasmedium, insbesondere mit Luft gefüllt ist zur Bereitstellung eines Freiraums für die elastisch verformbaren, elastomeren Kammerwandabschnitte.

Zweckmäßigerweise kann das Käfigelement des erfindungsgemäß gestalteten Hydrolagers zumindest zwei axial beabstandete Ringabschnitte aufweisen, die durch zumindest zwei, insbesondere diametral gegenüberliegende Längsstege, verbunden sind, wobei der erste und/oder der zweite Quersteg wie obenstehend beschrieben jeweils mit seinem bzw. ihren Längsenden mit beiden Längsstegen des Käfigelements verbunden sein kann bzw. können, insbesondere mit diesen integral hergestellt sein kann bzw. können. Je nach Ausführungsform kann das Käfigelement ein- oder mehrstückig ausgebildet sein.

Zweckmäßigerweise kann vorgesehen sein, dass das Käfigelement zweiteilig ausgebildet ist, wobei einander zugeordnete Anlageflächen durch die diametral gegenüberliegende bzw. umfänglich beabstandeten Längsstege verlaufen können. Vorzugsweise kann vorgesehen sein, dass die beiden Teile eines solchen Käfigelements im Bereich ihrer Anlageflächen komplementär wirkende Verbindungselemente aufweisen, insbesondere solche, die in axialer Richtung in Eingriff bringbar sind und in radialer Richtung wirkende Formschlussabschnitte bereitstellen.

Zweckmäßigerweise kann der Elastomerkörper radial zwischen den Längsstegen des Käfigelements und dem Innenelement des erfindungsgemäßen Hydrolagers angeordnete Tragfederabschnitte aufweisen, welche aufgrund der diametralen Anordnung der beiden Längsstege des Käfigelements in einer vorgegebenen radialen Richtung des Lagers eine hohe Radialsteifigkeit des Lagers ermöglichen. Demgegenüber kann der Elastomerkörper zwei quer zur Längsrichtung des Innenelements, insbesondere geradlinig und parallel zueinander verlaufende und durch elastomere Wandabschnitte begrenzte, beispielsweise mit Luft gefüllte Hohlräume umfassen, die jeweils an das Innenelement angrenzen, wodurch in eine radiale Richtung umfänglich versetzt, insbesondere um 90 Grad umfänglich versetzt, zu den diametral gegenüberliegenden Längsstegen des Käfigelements eine zum Tragfederabschnitt vergleichsweise geringe radiale Steifigkeit bereitgestellt werden kann. Dabei kann vorgesehen sein, dass diese elastomeren Wandabschnitte identisch sind mit den obenstehend beschriebenen, von dem Innenelement zugewandten radialen Endabschnitt des jeweiligen Querstegs ausgehenden, axial gegenläufigen und abgewinkelten inneren elastomeren Kammerwandabschnitten.

Insbesondere zur Bereitstellung von radial wirkenden Pumpflächen der zumindest vier Fluidkammern und zur Bereitstellung der Fluidkanäle kann das erfindungsgemäße mehrdirektional dämpfende Hydrolager eine z.B. zweiteilige Kanalschale aufweisen, die axial zwischen den Ringabschnitten des Käfigelements angeordnet ist und die Fluidkammern zur Außenhülse abschließt sowie radiale Nuten aufweisen kann zur Bereitstellung von zumindest zwei, insbesondere zumindest vier Fluidkanälen, welche durch die radialen Nuten der Kanalschale und zugeordnete Innenwandabschnitte der Außenhülse zumindest abschnittsweise gebildet sein können.

Je nach Anzahl der von einer Fluidkammer ausgehenden Fluidkanälen können die angegebenen radialen Ausnehmungen unterschiedlich gestaltet sein. Bei solchen Ausführungsformen, bei welchen zwischen den zumindest vier Fluidkammern nur zwei Fluidkanäle ausgebildet sind, weisen bei einer zweiteiligen Kanalschale die beiden Kanalhalbschalen jeweils radiale Nuten zur jeweiligen teilweisen Ausbildung der beiden Fluidkanäle auf. In einer solchen Ausführungsform, bei welcher vier Fluidkanäle zum fluidverbinden der vier Fluidkammern vorgesehen sind, kann eine jeweilige der beiden Kanalhalbschalen einen vollständigen Fluidkanal bzw. eine einem vollständigen Fluidkanal zugeordnete radiale Nut zur Bereitstellung einer Fluidverbindung zwischen einem Paar von axial benachbarten bzw. beabstandeten Fluidkammern aufweisen und darüber hinaus zwei radiale, insbesondere axial beabstandete und sich umfänglich erstreckende Nutabschnitte, die im zusammengesetzten Zustand der beiden Kanalhalbschalen mit zwei radialen Nuten der anderen Kanalhalbschale korrespondieren und ineinander übergehen zur Bereitstellung zweier Fluidkanäle zur Gestaltung einer Fluidverbindung zwischen jeweils zwei umfänglich beabstandeten Fluidkammern. Zur jeweiligen Bereitstellung einer Fluidverbindung zwischen einer jeweiligen radialen Nut und den beiden zugeordneten Fluidkammern können die radialen Nuten jeweils an ihren Längsenden bzw. jeweils an einem ihrer Längsenden einen radialen Durchbruch oder Durchführung durch die jeweilige Halbschale aufweisen.

Zur Erhöhung der Stabilität des erfindungsgemäßen Hydrolagers gegen äußere Betriebskräfte kann zweckmäßigerweise vorgesehen sein, dass die Kanalschale eine radiale Durchführung in Form einer Aufnahme aufweist, in welche sich im zusammengesetzten Zustand des Lagers ein sich radial erstreckender Abschnitt eines Quersteges des Käfigelements erstreckt, der wie obenstehend beschrieben die beiden axial beabstandeten Fluidkammern eines Paares von Fluidkammern separiert.

Zweckmäßigerweise kann vorgesehen sein, dass das Innenelement des erfindungsgemäßen Hydrolagers in einem axialen Abschnitt, über welchen sich die Fluidkammern erstrecken, einen etwa viereckigen Querschnitt aufweist. Diese Gestaltung des Innenelements ermöglicht einerseits eine einfache Gestaltung von Tragfederabschnitten an gegenüberliegenden Seiten des etwa viereckigen Querschnitts des Innenelements und gleichzeitig an den beiden anderen Seiten des viereckigen Querschnitts das Vorsehen der sich vom jeweiligen, dem Innenelement zugewandten radialen Endabschnitt eines Querstegs zum Innenelement erstreckenden elastomeren Kammerwandabschnitte zur Separierung der axial benachbarten Fluidkammern und zur Bereitstellung der beschriebenen geringen radialen Steifigkeit des Lagers in eine Richtung etwa senkrecht auf die beiden letztgenannten Seitenflächen des viereckigen Querschnitts innerhalb der axialen Erstreckung der Fluidkammern des Lagers. Die erwähnte vergleichsweise hohe Radialsteifigkeit des Lagers kann damit etwa senkrecht zu den diametral gegenüberliegenden Seitenflächen des Innenelements bereitgestellt werden, an welchen Tragfederabschnitte des Elastomerkörpers angeordnet sind.

Zur Bereitstellung eines innenteilseitigen Ansatzes einer jeweiligen äußeren elastomeren Kammermembranwand und zur Erhöhung axial wirksamer Pumpflächen kann zweckmäßigerweise vorgesehen sein, dass das Innenelement einen kragenartigen Flansch aufweist. Vorzugsweise kann dabei vorgesehen sein, dass an beiden axialen Endabschnitten der Fluidkammern eines Paars von Fluidkammern das Innenelement einen derartigen kragenartigen Flansch umfasst. Dieser Flansch kann je nach Ausführungsform kreisumfänglich gestaltet sein, es ist jedoch insbesondere bei einer Ausführungsform, bei welcher im axialen Abschnitt der Fluidkammern das Innenelement einen etwa viereckigen Querschnitt aufweist, auch möglich, diesen kragenartigen Flansch viereckig auszubilden.

Das Innenelement kann beispielsweise aus einem Kunststoffmaterial oder aus einem Metallmaterial hergestellt sein. Es ist jedoch auch möglich, dass das Innenelement einen Metallkern umfasst mit einem daran angebrachten, insbesondere angespritzten Kunststoffmantel, welcher zumindest abschnittsweise die umfängliche Gestalt des Innenelements festlegt.

Die Außenhülse kann beispielsweise aus einem Kunststoffmaterial oder aus einem Metallmaterial, beispielsweise Aluminium oder Stahl hergestellt sein. Gleiches gilt für das Käfigelement und die Kanalschale, vorzugsweise können diese aus einem Kunststoffmaterial, insbesondere einem faserverstärkten Kunststoffmaterial hergestellt sein.

Um bei erhöhten radialen Betriebskräften das erfindungsgemäße mehrdirektional dämpfende Hydrolager gegen unerwünschte Krafteinwirkungen auf elastomere Kammerwandabschnitte der Fluidkammern zu schützen, kann zweckmäßigerweise vorgesehen sein, dass an einem axialen Endabschnitt des Lagers axial außerhalb der Fluidkammern am Innenelement ein ringförmiges Anschlagselement vorgesehen ist, das im lastfreien Zustand des Lagers radial beabstandet zu einem an einer Innenfläche eines Ringelements des Käfigelements angeordneten Elastomerabschnitt angeordnet ist. Dabei kann vorgesehen sein, dass radiale Umfangsabschnitte des Anschlagselements bei einer erhöhten mechanischen radialen Belastung des Lagers an zugeordnete Elastomerabschnitte des Ringelements des Käfigs zur Anlage kommen, wodurch eine weitere relative Bewegung von Innenelement zum Käfigelement bzw. zur Außenhülse des Lagers verhindert ist. Insofern kann eine radiale Begrenzung der Verlagerung von Innenelement und Käfigelement bereitgestellt werden. Zweckmäßigerweise kann vorgesehen sein, dass der mit dem Anschlagselement zusammenwirkende Elastomerabschnitt des Ringelements als axialer Ausläufer einer äußeren Kammermembranwand ausgebildet ist. In einer Ausführungsform kann auch vorgesehen sein, dass das ringförmige Anschlagselement integral mit dem Innenelement ausgebildet ist.

Vorzugsweise kann vorgesehen sein, dass das erfindungsgemäße mehrdirektional dämpfende Hydrolager auch gegen eine zu große Verlagerung von Innenelement und Käfigelement bzw. Außenhülse in axialer Richtung geschützt ist. Hierzu kann vorgesehen sein, dass eine axiale Stirnfläche des Käfigs mit einem Elastomerpuffer belegt ist, der axial unterhalb einer stirnseitigen Endfläche des Innenelements liegt, so dass bei einer Anlage der stirnseitigen Endfläche des Innenelements in einen Einbauzustand des Lagers an einer Anlagefläche eines anderen Bauteils, das sich radial über das Innenelement hinaus erstreckt, bei einer relativen Verlagerung von Innenelement und Käfigelement bzw. Außenhülse zueinander diese Verlagerung auf den Überstand der stirnseitigen Endfläche des Innenelements zu der zugeordneten Anlagefläche des Elastomerpuffers an der axialen Stirnseite des Käfigs beschränkt ist.

Die Erfindung wird im Folgenden durch das Beschreiben einer Ausführungsform des erfindungsgemäßen mehrdirektional dämpfenden Hydrolagers nebst Abwandlungen unter Bezugnahme auf die beiliegenden Zeichnungen erläutert, wobei
Figur 1: ein erfindungsgemäßes, mehrdirektional dämpfendes Hydrolager in einer perspektivischen Halbschnittdarstellung mit zwei zueinander senkrechten Schnittebenen;
Figur 2: das Innenelement des erfindungsgemäßen Hydrolagers der Figur 1 in einer perspektivischen Ansicht;
Figur 3: das Käfigelement des erfindungsgemäßen Hydrolagers der Figur 1 in einer perspektivischen Ansicht
Figur 4: eine der beiden Kanalhalbschalen des erfindungsgemäßen Hydrolagers der Figur 1
Figur 5: das in Figur 1 gezeigte Hydrolager in einer (Teil)-Explosionsdarstellung;
Figur 6: das in Figur 1 gezeigte Hydrolager in einer ersten Vollschnittdarstellung, und
Figur 7: das Hydrolager der Figur 1 in einer zweiten Vollschnittdarstellung zeigt.

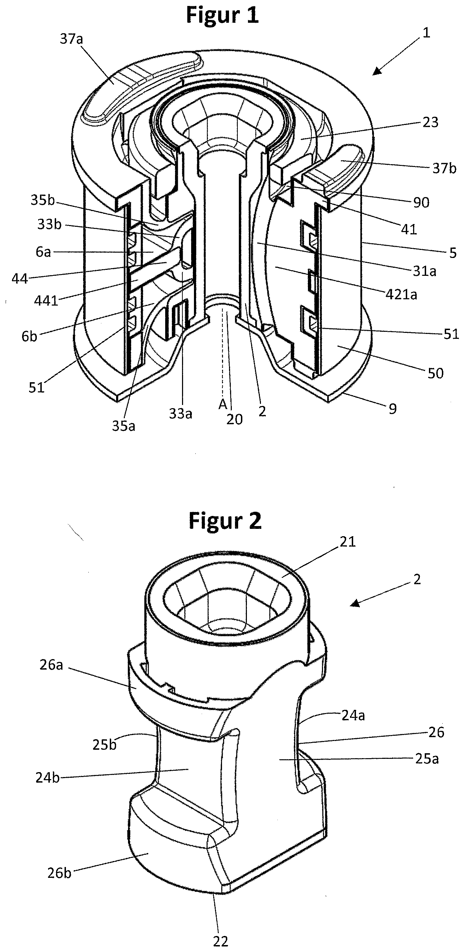

Nachfolgend wird zur Erläuterung der Erfindung diese an einem Beispiel eines mehrdirektional hydraulisch dämpfenden Lagers erläutert, wie es beispielsweise zur Aggregatlagerung im KFZ-Bereich, insbesondere zur Motorlagerung innerhalb der KFZ-Karosserie einsetzbar ist. Figur 1 zeigt das erfindungsgemäße, mehrdirektional hydraulisch dämpfende Lager in einer perspektivischen Halbschnittdarstellung mit zwei Schnittebenen, die beide parallel zur Lagerachse A und zueinander senkrecht orientiert sind. Das Hydrolager 1 ist als Buchsenlager ausgebildet mit einem Innenelement 2, das in der beschriebenen Ausführungsform eine Bohrung 20 zur Aufnahme eines Befestigungsbolzens aufweisen kann zur Befestigung an einem ersten Bauteil eines Kraftfahrzeuges. Das Hydrolager 1 wird über einen überwiegenden Abschnitt seiner Axialerstreckung radial durch eine Außenhülse 5 abgeschlossen, die in Einbaulage mit ihrer Außenmantelfläche 50, die in der Regal zylinderförmig ausgebildet sein kann, an eine Begrenzungsfläche eines das Hydrolager 1 aufnehmenden Lagerauges, beispielsweise durch Einpressen, angelegt. Diese Begrenzungsflächen können als Teil eines zweiten KFT-Bauteils ausgebildet sein, so dass das erfindungsgemäße Hydrolager 1 zur Lagerung der genannten beiden KFT-Bauteile ausgebildet sein kann.

Das Lager weist einen zwischen dem Innenelement 2 und der Außenhülse 5 angeordneten Elastomerkörper auf, der in der beschriebenen Ausführungsform zwei diametral gegenüberliegend angeordnete Tragfederabschnitte 31a, 31b aufweisen kann, von welchen aufgrund der beschriebenen Darstellung allein der sich im Wesentlichen über die gesamte axiale Erstreckung des Lagers erstreckende Tragfederabschnitt 31a sichtbar ist. In ihrer Gestaltung können beide Tragfederabschnitte 31a, 31b identisch ausgebildet sein.

Etwa um 90° zur diametralen Anordnung der Tragfederabschnitte 31a,31b umfänglich versetzt können wiederum diametral gegenüberliegend jeweils zwei axial aufeinanderfolgende bzw. axial benachbarte Fluidkammerpaare 6a, 6b; 7a, 7b angeordnet sein, von welchen wiederum aufgrund der beschriebenen Darstellung der Figur 1 allein die Fluidkammern 6a, 6b als Kammerpaar sichtbar sind. Zur Gestaltung dieser Fluidkammern 6a, 6b, 7a, 7b weist das erfindungsgemäße Hydrolager 1 ein Käfigelement auf, das untenstehend näher erläutert wird und das zumindest abschnittsweise im Elastomerkörper eingebettet ist, so dass der Elastomerkörper das Käfigelement und das Innenelement 2 miteinander verbindet. Beispielsweise kann vorgesehen sein, das Innenelement 2 und Käfigelement mittels einer Mehrzahl von Elastomerabschnitten wie beispielsweise die beschriebenen Tragfederabschnitte 31a, 31b und Kammerwandabschnitte zur Abgrenzung jeweiliger Fluidkammern 6a, 6b, 7a, 7b über einen Galvanisierungsprozess durch die beschriebenen Elastomerabschnitte elastisch miteinander verbunden sind.

In der Darstellung der Figur 1 sind zwei axial übereinander angeordnete Fluidkammern 6a, 6b bezeichnet, welche durch einen Quersteg 44 in horizontaler Richtung separiert sind, wobei der im Wesentlichen senkrecht zu einer Lagerachse A des Innenelements 2 sich erstreckende Quersteg 44 beabstandet zum Innenelement 2 ausgebildet ist. Dabei erstrecken sich vom radialen Endabschnitt des Quersteges 44 zwei axial gegenläufige und abgewinkelte innere elastomere Kammerwandabschnitte 33a, 33b bis zur äußeren Mantelfläche des Innenelements 2 und an diesem anhaftend, wodurch ein Hohlraum zwischen den beiden angegebenen Kammerwandabschnitten 33a, 33b und einer Außenmantelfläche des Innenelements 2 gebildet ist. Beide innenliegende Kammerwandabschnitte 33a, 33b sind ferner anhaftend am besagten radialen Endabschnitt des Querstegs 44 des Käfigelements angeordnet. In axialer Richtung sind die in Figur 1 sichtbaren, axial übereinander und im gleichen Umfangsabschnitt des Lagers angeordneten Fluidkammern 6a, 6b durch als Blähmembranabschnitte wirkende Kammerwandabschnitte 35a, 35b abgeschlossen, die wiederum anhaftend am Innenelement 2 und am Käfigelement angeordnet sind und sich insofern radial zwischen diesen erstrecken.

In der beschriebenen Ausführungsform kann diametral gegenüberliegend zu den beiden Fluidkammern 6a, 6b ein weiteres Paar von axial beabstandeten und in der Figur nicht sichtbaren Fluidkammern 7a, 7b ausgebildet sein, die in gleicher Weise wie die beschriebenen Fluidkammern 6a, 6b ausgebildet bzw. angeordnet sein können. Die beiden Hydrolager- bzw. Fluidkammerpaare 6a, 6b und 7a, 7b verlaufen insofern nicht vollumfänglich um den Kern, d. h. das Innenelement 2 des erfindungsgemäßen Hydrolagers 1 herum, sondern über einen vorgegebenen Umfangsabschnitt und sind jeweils in Umfangsrichtung mittels eines Tragfederabschnittes 31a, 31b des Hydrolagers 1 separiert.

Das erfindungsgemäße Hydrolager 1 kann an einer axialen Stirnseite ein Ringblech 9 aufweisen, das abgestuft ausgebildet ist und Anlageflächen für zugeordnete Stirnflächen des Innenelements 2 und des Käfigelements bzw. des Elastomerkörpers bereitstellt.

Das in Figur 1 dargestellte erfindungsgemäße Hydrolager 1 ist zur Verrichtung von Dämpfungsarbeit in zwei zueinander senkrecht orientierte Arbeitshauptrichtungen "radial/axial" ausgebildet, wobei das Antwortverhalten des Hydrolagers 1 stark abhängig eingerichtet sein kann. Das Dämpfungsverhalten wird zum einen durch die Anordnung der Elastomerabschnitte des Elastomerkörpers und zum anderen durch die Anordnung der angegebenen, über Fluidkanäle fluidverbundenen Fluidkammern 6a, 6b, 7a, 7b festgelegt. Eine erste Hauptarbeitseinrichtung betrifft eine relative Verlagerung von Innenelement 2 und Käfigelement in Richtung der Lagerachse A des Hydrolagers 1, eine zweite Hauptarbeitsrichtung betrifft eine relative radiale Verlagerung von Innenelement 2 zum Käfigelement, wobei das Ansprechverhalten in radialer Richtung in den in Figur 1 angegebenen, senkrecht zueinander orientierten Schnittebenen wiederum stark unterschiedlich gestaltet sein kann. Während das Hydrolager 1 bei radialer Belastung, die innerhalb der in Figur 1 gezeigten Ebene verläuft, welche den Tragfederabschnitt 31a und den in der Darstellung nicht sichtbaren diametral gegenüberliegenden Tragfederabschnitt 31b umfasst, eine hohe Radialsteifigkeit aufweist, zeigt das Hydrolager 1 der Figur 1 bei einer radialen Auslenkung, d. h. einer Verlagerung des Innenelements 2 zum Käfigelement in der in Figur 1 gezeigten Schnittebene, welche den Quersteg 44 mit den daran endstämmig sich in Richtung zum Innenelement 2 erstreckenden Kammerwandabschnitten 33a, 33b umfasst, eine geringe Radialsteifigkeit, die im Wesentlichen durch die angegebenen elastomeren Kammerwände 35a, 35b und 33a, 33b sowie das Dämpfungsverhalten der fluidverbundenen Paare von elastomeren Fluidkammern 6a, 6b und 7a, 7b bestimmt ist. Auf die Funktionsweise des erfindungsgemäßen, mehrdirektional hydraulisch dämpfenden Hydrolagers 1 wird untenstehend eingegangen, nachdem der grundsätzliche Aufbau des Hydrolagers 1 durch Bezugnahme auf einzelne Bauteile näher erläutert ist.

Figur 2 zeigt in einer perspektivischen Ansicht das Innenelement 2 zur Gestaltung des erfindungsgemäßen Hydrolagers 1. In der beschriebenen Ausführungsform weist das Hydrolager 1 einen inneren Kernabschnitt 21 und einen Außenabschnitt 22 auf, wobei letzterer im Wesentlichen die äußere Begrenzungsfläche, zumindest über den überwiegenden Anteil der axialen Erstreckung des Innenelements 2 bereitstellt. Dabei kann der Kernabschnitt 21 aus einem Metallmaterial, beispielsweise Aluminium oder Stahl und der Außenabschnitt 22 aus einer Anspritzung 26 an den Kernabschnitt 21, beispielsweise umfassend ein Kunststoffmaterial aufweisen, das stoffschlüssig mit dem Kernabschnitt 21 verbunden ist.

Wie aus Figur 2 ersichtlich, kann das Innenelement 2 in einem Axialabschnitt eine etwa rechteckförmige Grenzfläche aufweisen mit jeweils zwei gegenüberliegenden, etwa parallel zueinander angeordneten Seitenflächen 24a, 24b und 25a, 25b. In der beschriebenen Ausführungsform können die beiden Grenzflächen 24a, 24b umfänglich einem jeweiligen Paar von Fluidkammern 6a, 6b und 7a, 7b zugeordnet sein, bzw. diese in ihrer Erstreckung senkrecht zur Lagerachse A im Wesentlichen festlegen. In ähnlicher Weise können die einander gegenüberliegenden Seitenflächen 25a, 25b einer jeweiligen Erstreckung senkrecht zur Lagerachse A des Hydrolagers 1 der Tragfederabschnitte 31, 31b zugeordnet sein bzw. festlegen. Die im Wesentlichen ebenen bzw. leicht gekrümmten und den Fluidkammern 6a, 6b, 7a, 7b zugeordneten Seitenflächen 24a, 24b können zumindest an einem, oder wie in der beschriebenen Ausführungsform an beiden Längsenden radial nach außen sich erstreckende Flanschkragen 26a, 26b aufweisen, die in noch zu beschreibender Art bei dem erfindungsgemäßen Hydrolager 1 als axiale Pumpflächen und/oder als Ankopplungsabschnitte für die, die jeweilige Fluidkammer 6a, 6b, 7a, 7b abschließenden Kammerwänden 35a, 35b dienen. In einer abgewandelten Ausführungsform können die Flanschkragen 26a, 26b auch umfänglich geschlossen und/oder ringförmig um den Kernabschnitt 21 des Innenelements 2 ausgebildet sein.

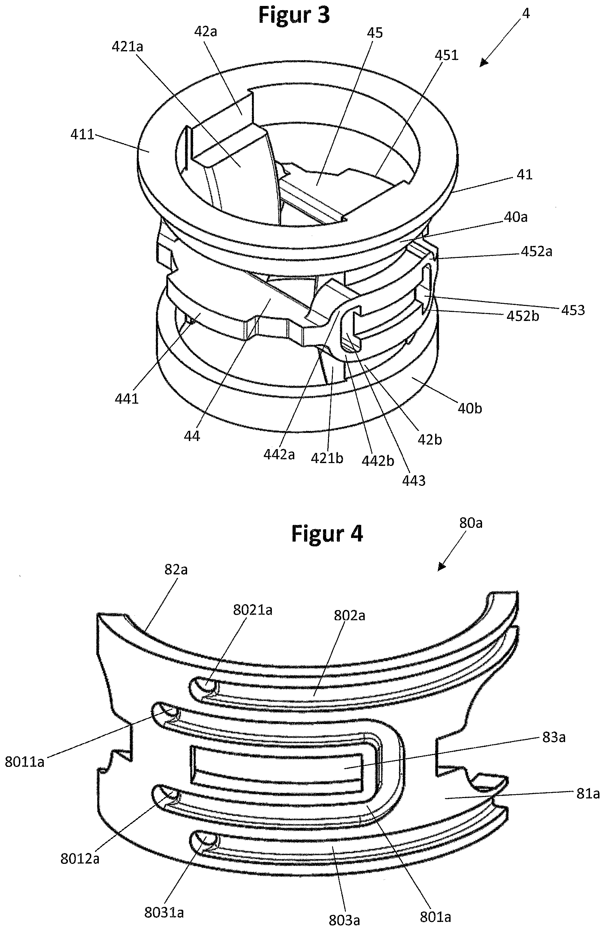

Figur 3 zeigt einen beispielhaften Aufbau des Käfigelements des erfindungsgemäßen, mehrdirektional hydraulisch dämpfenden Lagers 1 in einer perspektivischen Ansicht. In dieser Ausführungsform weist das Käfigelement 4 zwei axial beabstandete Ringabschnitte 40a, 40b auf, die mittels zweier radial bzw. diametral gegenüberliegenden Längsstegen 42a, 42b miteinander verbunden sind. Die Längsstege 42a, 42b weisen gekrümmte, sich zur axialen Mitte radial nach innen erstreckende Verdickungen 421a, 421b auf, an welchen die mit Bezug auf Figur 1 erläuterten Tragfederabschnitte 31a, 31b anhaftend angeordnet sein können, die wiederum radial innen am Innenelement 2 anhaften können, wodurch Innenelement 2 und Käfigelement 4 elastisch im fertigen Hydrolager 1 miteinander verbunden sind.

Diametral gegenüberliegende Querstege 44, 45 können in der beschriebenen Ausführungsform integral zu den beiden radialen Verdickungen 421a, 421b der Längsstege 42a, 42b ausgebildet und angeordnet sein und diese miteinander verbinden. Die Kopplung der Querstege 44, 45 an die jeweiligen radialen Verdickungen 421a, 421b kann über zugeordnete Gabelarme 442a, 442b und 452a, 452b erfolgen, die von einer axialen Endfläche des jeweiligen Quersteges 44, 45 ausgehen und sich aufgabelnd bis zu einem zugeordneten Längssteg 42a, 42b unter Ausbildung einer jeweiligen Gabelöffnung 443, 453 erstrecken. Wie ein Vergleich der Figuren 1 und 3 zeigt, bilden die Querstege 44, 45 jeweilige Trennwandabschnitte zu dem jeweiligen Paar von axial beabstandeten Fluidkammern 6a, 6b und 7a, 7b. Die Gabelarme 442, 442b und 452a, 452b können in der beschriebenen Ausführungsform als Anlenkflächen für die elastomeren Kammerwandabschnitte 33a, 33b und 34a, 34b dienen, die über die Längserstreckung der Querstege 44, 45 zwischen den Längsstegen 42a, 42b verlaufen, siehe ferner Figur 1.

Während die Querstege 44, 45 an ihrer dem Innenelement zugewandten Stirnfläche zwischen den Längsstegen 42a, 42b einen etwa geradlinigen Verlauf aufweisen, an dem die elastomeren Kammerwände 33a, 33b und 34a, 34b axial beabstandet und axial gegenläufig angreifen, weisen die Querstege 44, 45 an ihrer dem Innenelement 2 abgewandten Stirnfläche einen jeweiligen radialen Vorsprung 441, 451 auf, der sich in noch zu beschreibender Art radial in eine jeweilige Kanalschale 80a, 80b hinein erstreckt zur beschriebenen Separierung der beiden axial übereinander angeordneten und durch die Querstege 44, 45 getrennten Fluidkammerpaare 6a, 6b und 7a, 7b.

In der beschriebenen Ausführungsform kann die Kanalschale 8, welche zur radialen Begrenzung der Fluidkammern 6a, 6b und 7a, 7b zur Außenhülse 5 und zur Bereitstellung von Fluidkanälen zwischen den Fluidkammern 6a, 6b und 7a, 7b und damit zur Bereitstellung eines Fluidaustausches zwischen den Fluidkammern 6a, 6b, 7a, 7b ausgebildet ist, in der beschriebenen Ausführungsform zweiteilig gestaltet sein. Figur 4 zeigt eine solche Kanalhalbschale 80a in einer perspektivischen Ansicht mit Blick auf die in Einbaulage zur Außenhülse 5 gerichtete Außenfläche 81a, wobei die nicht dargestellte Kanalhalbschale 82b entsprechend gestaltet sein kann. Die in Figur 4 dargestellte Kanalhalbschale 80a weist etwa axial mittig über einen vorgegebenen Umfangsabschnitt, der beispielsweise zwischen 30° und 110° betragen kann, eine Durchführung 83a auf zur Aufnahme eines zugeordneten radialen Vorsprungs 441 des Querstegs 44, siehe Figur 3. Insofern markiert diese Durchführung 83a die Separierung der beiden axial übereinander angeordneten Fluidkammern 6a, 6b, siehe Figur 1.

In der beschriebenen Ausführungsform kann jede der Kanalhalbschalen 80a, 80b, die hier jeweils einem Paar von axial übereinander angeordneten Fluidkammern 6a, 6b bzw. 7a, 7b zugeordnet ist und diese radial begrenzt, zwei Kanal- bzw. Radialdurchführungen 8011, 8021 bzw. 8012 und 8031 für jede der Fluidkammern 6a, 6b und 7a, 7b aufweisen, welche in zugeordnete Kanalnuten 801, 802 und 803 münden. Diese Kanalnuten 801a, 802a, 803a stellen zugeordneten Abschnitten der Innenmantelfläche der Außenhülse 5 zugeordnete Fluidkanäle bereit, über welche ein Austausch von Fluid zwischen den Fluidkammern 6a, 6b und 7a, 7b erfolgen kann. Während z.B. die Kanalnut 801a mit den zugeordneten Radialdurchführungen 8011a und 8012a zwei übereinander und umfänglich über einen gleichen Abschnitt oder überlappend angeordneten Fluidkammern 6a, 6b fluidverbindet, erfolgt in Einbaulage der Kanalhalbschalen über die in der Figur 4 obere Kanalnut 802a und eine zu dieser ausgerichtete Kanalnut 802b der zweiten Kanalhalbschale 82b eine Fluidverbindung zweier diametral gegenüberliegender Fluidkammern 6a und 7a. Gleiches gilt in entsprechender Weise für zwei bezüglich der Darstellung der Figur 4 untenliegenden Fluidkammern 6b, 7b, über die Kanalnut 803a und einer zugeordneten, zu dieser ausgerichteten Kanalnut 803b zur Fluidverbindung zweier in Einbaulage etwa auf gleicher axialer Höhe angeordneten und in radialer Richtung diametral gegenüberliegenden Fluidkammern 6b und 7b. Wie der Fachmann erkennt, ist in der dargestellten Ausführungsform jede Fluidkammer mit einer über den gleichen Umfangsabschnitt und axial beabstandeten Fluidkammer fluidverbunden und darüber hinaus fluidverbunden mit einer axial auf etwa gleicher Höhe und radial diametral gegenüberliegenden Fluidkammer.

Die Kanalschale 80 kann je nach Ausführungsform als Spritzgussteil, insbesondere als zweiteiliges Spritzgussteil ausgebildet sein, wobei auch Ausführungsformen aus einem faserverstärkten Kunststoff im Rahmen der Erfindung liegen.

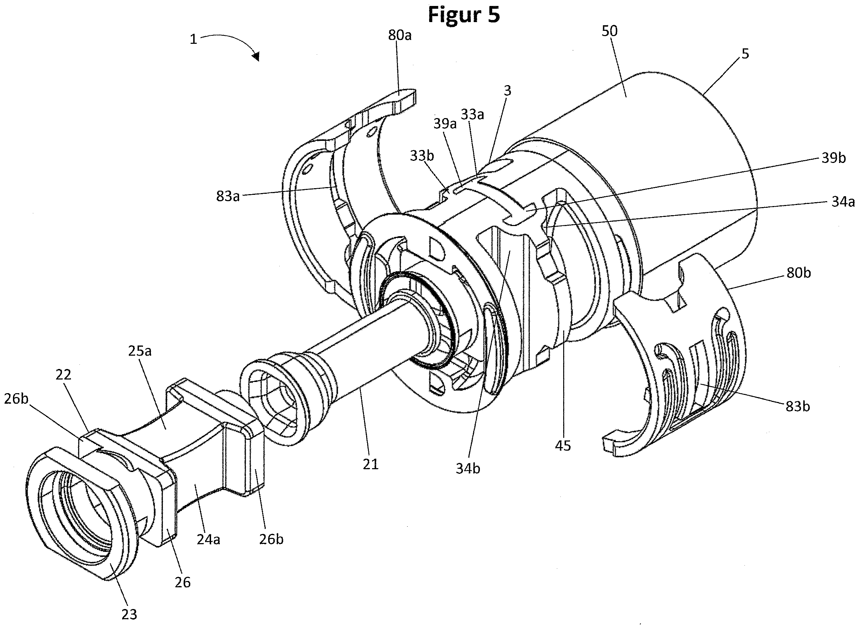

Figur 5 zeigt das erfindungsgemäße mehrdirektional hydraulisch dämpfende Lager 1 in einer Teilexplosionsdarstellung, bei welcher das in der beschriebenen Ausführungsform zweiteilige Innenelement 2, die Außenhülse 5, die beiden Halbschalen 80a, 80b sowie der Elastomerkörper 3 dem mit von Elastomermaterial zumindest teilweise eingebetteten Käfigelement 4 zueinander axial bzw. radial beabstandet dargestellt sind. Erkennbar schließen die beiden Kanalhalbschalen radial jeweils ein Paar axial übereinander angeordnete Fluidkammern 6a, 6b und 7a, 7b ab, welche axial durch die Querstege 44, 45 des Käfigelements 4 separiert sind. Die radial und axial gegenläufig sich erstreckenden gabelförmigen Kammerwände 33a, 33b und 34a, 34b bilden jeweilige Hohlräume 39a, 39b aus, die zweckmäßigerweise nicht mit Dämpfungsfluid, insbesondere Dämpfungsflüssigkeit gefüllt sein können. Zweckmäßigerweise kann vorgesehen sein, diese beiden Hohlräume 39a, 39b mit einem Gas wie Luft zu füllen und zu verschließen, um eine hohe Beweglichkeit der Kammerwände 33a, 33b und 34a, 34b bei Betriebsbelastungen in radialer Richtung zu ermöglichen, insbesondere zur Einstellung einer geringen radialen Steifigkeit des erfindungsgemäß ausgebildeten, mehrdirektional dämpfenden Hydrolagers 1.

Wie aus Fig. 5 hervorgeht, kann das Innenelement einen Kernabschnitt 21 und einen Außenabschnitt in Form eines angespritzten Abschnittes 26 aufweisen, wobei letzterer die radialen Begrenzungsflächen des Innenelements 2 im Bereich der Fluidkammern 6a, 6b und 7a, 7b festlegen kann.

Wie erläutert, kann in einer Ausführungsform vorgesehen sein, dass bei dem erfindungsgemäßen, mehrdirektional hydraulisch dämpfenden Lager 1 zumindest vier Fluidkammern 6a, 6b und 7a, 7b umfasst sind, wobei jeweils ein Paar von Fluidkammern 6a und 6b bzw. 7a und 7b über den gleichen Umfangsabschnitt des Hydrolagers 1 oder zumindest über einen überlappenden Umfangsabschnitt des Hydrolagers 1 axial übereinander angeordnet sind und zu diesem Paar von Fluidkammern 6a und 6b bzw. 7a und 7b ein umfänglich beabstandetes Paar von Fluidkammern, insbesondere ein diametral zum ersten Fluidpaar radial gegenüberliegendes Paar von Fluidkammern vorgesehen ist. Dabei kann das zweite Paar von Fluidkammern wiederum über den gleichen Umfangsabschnitt bzw. zumindest umfänglich überlappend und axial übereinander angeordnet sein.

Es kann vorgesehen sein, dass die beiden Fluidkammern 6a und 6b bzw. 7a und 7b eines jeweiliges Paars von Fluidkammern über einen einzelnen Fluidkanal fluidverbunden sind und jede Fluidkammer dieses Fluidpaares mit jeweils einer anderen Fluidkammer 6a, 6b, 7a, 7b des anderen Fluidpaares mit etwa gleicher axialer Lage, so dass in dieser Ausführungsform jede dieser Fluidkammern 6a, 6b, 7a, 7b sowohl bei einer radialen relativen Verlagerung von Käfigelement 4 und Innenlement 2 als auch bei einer axialen relativen Verlagerung von Käfigelement 4 und Innenelement 2 Teil eines hydraulischen Systems ist, in welchem Dämpfungsarbeit verrichtet werden kann. Dabei kann vorgesehen sein, die jeweiligen Kanalparameter wie Kanallänge und Kanaldurchmesser an die gewünschte Dämpfung anzupassen, so dass das hydraulische Dämpfungsverhalten des erfindungsgemäßen Hydrolagers 1 in radialer Arbeitsrichtung und in axialer Arbeitsrichtung unabhängig voneinander einstellbar ist.

In einer weiteren Ausführungsform kann auch vorgesehen sein, die beschriebenen vier Fluidkammern 6a, 6b, 7a, 7b umfassend jeweils ein Paar axial übereinander angeordneter Fluidkammern nur mit zwei Fluidkanälen zu verbinden, insbesondere in der Art, dass eine einzelne Fluidkammer des ersten Paares von Fluidkammern 6a und 6b mit einer einzelnen Fluidkammer des zweiten Fluidpaares 7a und 7b verbunden ist, wobei die fluidverbundenen Fluidkammern umfänglich zueinander versetzt, insbesondere diametral gegenüberliegend und zusätzlich axial zueinander versetzt angeordnet sind. Auch in dieser Ausführungsform bildet jede der zumindest vier Fluidkammern einen Teil eines hydraulischen Systems aus, das sowohl bei einer axialen Belastung des Hydrolagers 1 als auch bei einer radialen Belastung des Lagers 1 wirkt. Im Unterschied zur Ausführungsform mit vier Fluidkanälen sind hier die hydraulischen Dämpfungseigenschaften, die wesentlich durch die Gestaltung des die jeweiligen zwei Fluidkammern verbindenden Fluidkanals festgelegt sind, gleich eingestellt.

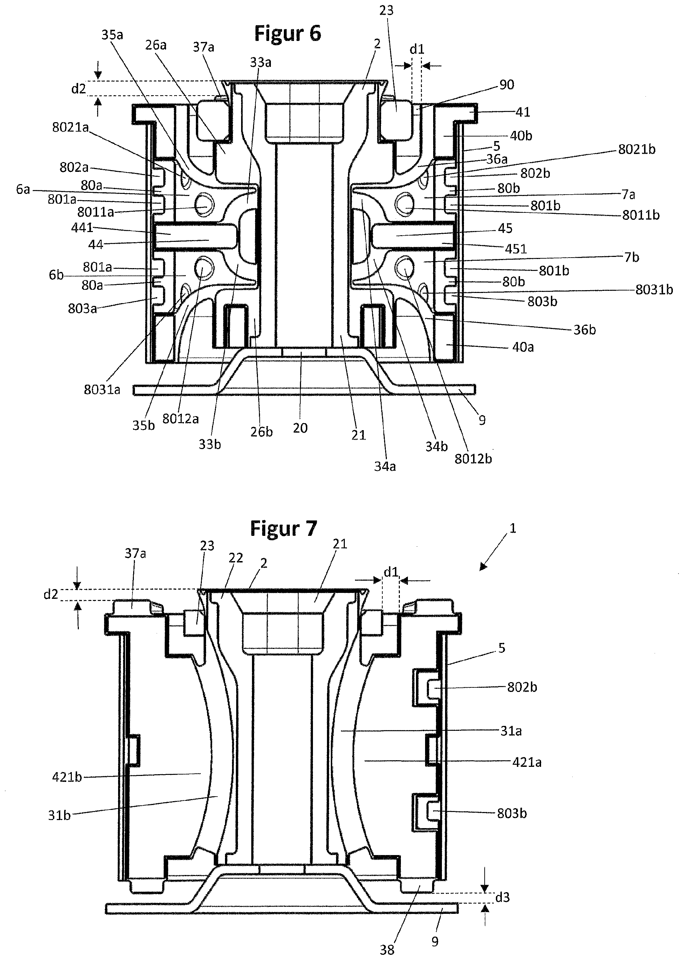

Figur 6 zeigt das Hydrolager 1 der Figur 1 in einem Vollschnitt in Längsrichtung mit Blick auf die hier diametral gegenüberliegend angeordneten Fluidkammerpaare 6a, 6b und 7a, 7b, die beide jeweils durch einen Quersteg 44, 45 und am jeweiligen Quersteg angreifende und sich bis zum Innenelement 2 erstreckende Kammerwände 33a, 33b, 34a, 34b getrennt sind. Erkennbar sind ferner die beiden Kanalhalbschalen 80a, 80b mit ihren Kanalnuten 801a, 802a und 803a sowie ihren diesbezüglichen Kanaldurchführungen 8011a, 8011b, 8012a, 8012b, 8021a, 8021b und 8031a, 8031b. Die Fluidkammern 6a, 6b des in der Figur 6 linken Fluidkammerpaares werden axial außen durch elastomere Kammerwände 35a, 35b begrenzt, die Fluidkammern 7a, 7b des in Figur 6 rechten Fluidpaares durch die außenliegenden Kammerwände 36a, 36b.

Das mit Bezug auf die Figuren geschriebene erfindungsgemäß gestaltete Hydrolager 1 weist Gestaltungsmerkmale auf zur Beschränkung der radialen und Gestaltungsmerkmale zur Beschränkung der axialen relativen Verlagerung von Innenelement 2 und Käfigelement 4 bzw. Außenhülse 5. Zur Beschränkung der radialen relativen Verlagerung ist an einer radialen Grenzfläche in einem axialen Endabschnitt des Innenelements 2 ein ringförmiges Anschlagselement 23 angeordnet, das in einer anderen Ausführungsform beispielsweise integral mit der Anspritzung 26 an den Kernabschnitt 21 des Innenelements 2 ausgebildet sein kann. Eine radiale Außenfläche des Anschlagselements 23 ist radial zu einer mit Elastomer belegten radialen Innenfläche des Käfigelements 4 um eine Strecke d1 beabstandet. In der in den Figuren gezeigten Ausführungsform kann die elastomere Belegung der dem Anschlagselement bzw. Anschlagsring 23 zugeordnete Radialfläche als axialer Ausläufer der außenliegenden Kammerwand 35a, 36a innerhalb der Umfangsabschnitte der Fluidpaare 6a, 6b und 7a, 7b ausgebildet sein.

Eine Beschränkung der relativen axialen Verlagerung von Innenelement und Käfigelement 4 bzw. Außenhülse 5 kann bei dem erfindungsgemäßen Hydrolager 1 dadurch realisiert sein, dass das Innenelement 2 an einem in Figur 6 dargestellten Orientierung, oberen Abschnitt an ein Bauteil befestigt ist, das sich radial nach außen erstreckt bis in den Bereich des dortigen Stirnbereich des Käfigelements 4 hinein, wobei an dessen Stirnseite elastomere Anschläge 37a, 37b angeordnet sind, siehe Figur 1. Wie in Figur 6 angegeben, ist die axiale Beabstandung des eingebauten erfindungsgemäß gestalteten Hydrolagers 1 damit auf die Strecke d2 beschränkt.

Figur 7 zeigt einen Vollschnitt des Hydrolagers 1 der Figur 1 mit Blick auf die radial bzw. diametral gegenüberliegenden Tragfederabschnitte 31a, 31b, die in der beschriebenen Ausführungsform an den zugeordneten radialen Verdickungen 421a, 421b der Längsstege 42a, 42b des Käfigelements 4 und an Außenmantelabschnitten des Innenelements 2 anhaften und damit stoffschlüssig verbunden sind. Aus der Schnittdarstellung der Figur 7 geht ferner ein weiterer axialer Anschlag, gebildet durch eine innenliegende Axialfläche des Ringblechs 9 und einem elastomeren, an einer in der Figur unteren Stirnseite des Käfigelements 4 angeordneten Anschlag 38a, 38b hervor zur Beschränkung einer axialen Verlagerung von Innenelement 2 und Außenhülse 5 auf das Maß d3.

### Bezugszeichenliste

- 1: Hydrolager
- 2: Innenelement
- 3: Elastomerkörper
- 4: Käfigelement
- 5: Außenhülse
- 6a, 6b: Fluidkammer, erstes Paar von Fluidkammern
- 7a, 7b: Fluidkammer, zweites Paar von Fluidkammern
- 8: Kanalschale
- 9: Ringblech
- 20: Bohrung
- 21: Kernabschnitt
- 22: Außenabschnitt
- 23: Anschlagselement
- 24a, 24b: Seitenfläche
- 25a, 25b: Seitenfläche
- 26: Anspritzung
- 26a, 26b: Flanschkragen
- 31a, 31b: Tragfederabschnitt
- 33a, 33b: Kammerwand
- 34a, 34b: Kammerwand
- 35a, 35b: außenliegende Kammerwand
- 36a, 36b: außenliegende Kammerwand
- 37a, 37b: elastomerer Anschlag
- 38a, 38b: elastomerer Anschlag
- 39a, 39b: Hohlraum
- 40a, 40b: Ringabschnitt
- 41: Flansch
- 42a, 42b: Längssteg
- 44: Quersteg
- 45: Quersteg
- 50: Außenmantelfläche
- 51: Innenmantelfläche
- 80a, 80b: Kanalhalbschale
- 81a, 82b: Außenfläche
- 82a, 82b: Innenfläche
- 83a, 83b: Durchführung
- 90: Radialabstand
- 411: Stirnseite des Flansches
- 421a, 421b: radiale Verdickung
- 441: radialer Vorsprung
- 442a, 442b: Gabelarm
- 443: Gabelöffnung
- 451: radialer Vorsprung
- 452a, 452b: Gabelarm
- 453: Gabelöffnung
- 801a, 801b: Kanalnut
- 802a, 802b: Kanalnut
- 803a, 803b: Kanalnut
- 805a, 805b: Radialaufnahme
- 8011a: Radialdurchführung
- 8011b: Radialdurchführung
- 8012a: Radialdurchführung
- 8012b: Radialdurchführung
- 8021a: Radialdurchführung
- 8021b: Radialdurchführung
- 8031a: Radialdurchführung
- 8031b: Radialdurchführung
- A: Achse
- d1: Radialabstand
- d2: Axialabstand
- d3: Axialabstand

## Patentansprüche

1. Hydraulisch dämpfendes Lager (1), umfassend
- ein sich axial erstreckendes Innenelement,
- einen Elastomerkörper (3),
- ein Käfigelement, das zumindest abschnittsweise im Elastomerkörper (3) eingebettet ist, wobei der Elastomerkörper (3) das Käfigelement und das Innenelement elastisch miteinander verbindet;
- eine das Innenelement, das Käfigelement und den Elastomerkörper (3) umgreifende Außenhülse (5)
- zumindest eine erste und eine zweite, jeweils zwischen Außenhülse und Innenelement angeordnete Fluidkammer (6a, 6b, 7a, 7b), die über einen Fluidkanal verbunden sind,
**dadurch gekennzeichnet, dass** ferner zumindest eine dritte und eine vierte, jeweils zwischen Außenhülse und Innenelement angeordnete Fluidkammer umfasst sind, und die zumindest vier Fluidkammern über zumindest einen weiteren Fluidkanal verbunden sind, wobei jede der zumindest vier Fluidkammern (6a, 6b, 7a, 7b) bei einer relativen Verlagerung von Innenelement und Käfigelement in einer ersten Richtung und bei einer relativen Verlagerung von Innenelement und Käfigelement in einer zweiten Richtung an der Verrichtung von Dämpfungsarbeit beteiligt ist.

2. Hydraulisch dämpfendes Lager (1) nach Anspruch 1,
**dadurch gekennzeichnet, dass** das Lager (1) zumindest zwei Paare von axial übereinander angeordnete Fluidkammern (6a und 6b; 7a und 7b) aufweist, wobei die zumindest zwei Paare umfänglich zueinander beabstandet sind, insbesondere auf gleicher axialer Höhe radial gegenüberliegend angeordnet sind.

3. Hydraulisch dämpfendes Lager (1) nach Anspruch 1 oder 2,
**dadurch gekennzeichnet, dass** die beiden Fluidkammern (6a und 6b bzw. 7a und 7b) eines jeweiligen Paares von axial übereinander angeordneten Fluidkammern sich im Wesentlichen über den gleichen Umfangsabschnitt erstrecken.

4. Hydraulisch dämpfendes Lager (1) nach einem der Ansprüche 1 bis 3, **dadurch gekennzeichnet, dass** die zumindest vier Fluidkammern (6a, 6b, 7a, 7b) eine im Wesentlichen identische Erstreckung in Umfangsrichtung des Lagers (1) aufweisen.

5. Hydraulisch dämpfendes Lager (1) nach einem der Ansprüche 1 bis 4, **dadurch gekennzeichnet, dass** jede der zumindest vier Fluidkammern (6a, 6b, 7a, 7b) mit einer zur jeweiligen Fluidkammer radial gegenüberliegend und insbesondere auf gleicher axialer Höhe angeordneten Fluidkammer mittels eines zugeordneten Fluidkanals und mit einer zur jeweiligen Fluidkammer axial benachbart und insbesondere auf gleichem Umfangsabschnitt angeordneten Fluidkammer mittels eines zugeordneten Fluidkanals verbunden ist.

6. Hydraulisch dämpfendes Lager (1) nach einem der Ansprüche 1 bis 5, **dadurch gekennzeichnet, dass** jeweils zwei Fluidkanäle zur Bereitstellung von Dämpfungsarbeit in axialer Richtung und zwei Fluidkanäle zur Bereitstellung von Dämpfungsarbeit in radialer Richtung zwischen den zumindest vier Fluidkammern (6a, 6b, 7a, 7b) angeordnet sind.

7. Hydraulisch dämpfendes Lager (1) nach einem der Ansprüche 1 bis 4, **dadurch gekennzeichnet, dass** jede der vier Fluidkammern (6a, 6b, 7a, 7b) mit einer einzelnen der anderen drei Fluidkammern über einen Fluidkanal verbunden ist, wobei die miteinander verbunden Fluidkammern radial gegenüberliegend und axial aufeinanderfolgend zueinander angeordnet sind.

8. Hydraulisch dämpfendes Lager (1) nach einem der Ansprüche 1 bis 7, **dadurch gekennzeichnet, dass** das Käfigelement im Längsschnitt des Lagers (1) einen ersten Quersteg (44) aufweist, der sich radial in Richtung zum Innenelement erstreckt zur Bereitstellung einer jeweiligen axialen Pumpfläche für zwei, über einen vorgegebenen Umfangsabschnitt angeordneten und axial aufeinanderfolgenden Fluidkammern der zumindest vier Fluidkammern (6a, 6b, 7a, 7b),
wobei vorzugsweise
umfänglich beabstandet zum ersten Quersteg (44) das Käfigelement im Längsschnitt des Lagers (1) einen zweiten Quersteg (45) aufweist, der sich radial in Richtung zum Innenelement erstreckt zur Bereitstellung einer jeweiligen axialen Pumpfläche der beiden anderen, über einen vorgegebenen Umfangsabschnitt angeordneten und axial aufeinanderfolgenden Fluidkammern.

9. Hydraulisch dämpfendes Lager (1) nach Anspruch 8,
**dadurch gekennzeichnet, dass** sich anhaftend an dem, dem Innenelement zugewandten radialen Endabschnitt des jeweiligen Querstegs (44, 45) zwei axial gegenläufige und abgewinkelte innere elastomere Kammerwandabschnitte (33a, 33b, 34a, 34b) zum Innenelement anhaftend erstrecken zur axialen Abgrenzung der beiden axial aufeinanderfolgenden Fluidkammern (6a, 6b bzw. 7a, 7b).

10. Hydraulisch dämpfendes Lager (1) nach Anspruch 8 oder 9,
**dadurch gekennzeichnet, dass** das Käfigelement zumindest zwei axial beabstandete Ringabschnitte aufweist, die durch zumindest zwei, insbesondere diametral gegenüberliegende Längsstege verbunden sind, wobei der erste und/oder der zweite Quersteg (44, 45) mit den beiden Längsstegen (42a, 42b) verbunden sind.

11. Hydraulisch dämpfendes Lager (1) nach einem der Ansprüche 1 bis 10, **dadurch gekennzeichnet, dass** in einer Querrichtung des Lagers zu einer Längsrichtung des Innenelements zumindest zwei, insbesondere geradlinig und parallel zueinander verlaufende und durch Elastomerwandabschnitte begrenzte Hohlräume umfasst sind, die jeweils an das Innenelement angrenzen.

12. Hydraulisch dämpfendes Lager (1) nach einem der Ansprüche 1 bis 11, **dadurch gekennzeichnet, dass** eine insbesondere zweiteilige Kanalschale vorgesehen ist, die axial zwischen den Ringabschnitten des Käfigelements angeordnet ist und die Fluidkammern (6a, 6b, 7a, 7b) zur Außenhülse abschließt sowie radiale Ausnehmungen aufweist zur Bereitstellung von zumindest zwei, insbesondere vier Fluidkanälen mit zugeordneten Innenwandabschnitten der Außenhülse,
wobei vorzugsweise
das Innenelement im axialen Abschnitt der Fluidkammern (6a, 6b, 7a, 7b) einen etwa viereckigen Querschnitt aufweist.

13. Hydraulisch dämpfendes Lager (1) nach einem der Ansprüche 1 bis 12, **dadurch gekennzeichnet, dass** das Innenelement zur Bereitstellung eines innenteilseitigen Ansatzes einer jeweiligen äußeren Kammermembranwand einen kragenartigen, insbesondere viereckigen, Flansch aufweist.

14. Hydraulisch dämpfendes Lager (1) nach einem der Ansprüche 1 bis 13, **dadurch gekennzeichnet, dass** an einem axialen Endabschnitt des Lagers (1) axial außerhalb der Fluidkammern (6a, 6b, 7a, 7b) am Innenelement ein ringförmiges Anschlagselement (23a, 23b) angeordnet ist, das sich im lastfreien Zustand des Lagers (1) radial beabstandet zu einem an einer Innenfläche von einem der Ringelemente des Käfigs angeordneten Elastomerabschnitt befindet,
wobei vorzugsweise
eine axiale Stirnfläche des Käfigs mit einem Elastomerpuffer belegt ist, der axial unterhalb der stirnseitigen Endfläche des Innenelements liegt.

15. Hydraulisch dämpfendes Lager (1) nach einem der Ansprüche 1 bis 14, **dadurch gekennzeichnet, dass** das Käfigelement zweiteilig ausgebildet ist, wobei die beiden Teile in einer Längsschnittebene in Querrichtung zusammensetzbar sind mit radial wirkenden komplementären Rastmitteln, welche nach der Verrastung einen axialen Formschluss der beiden Käfigelemente zueinander bereitstellen.
